# EUROPÄISCHE PATENTSCHRIFT

(11) **EP 4 467 836 B1**
(45) Veröffentlichungstag und Bekanntmachung des Hinweises auf die Patenterteilung: **29.07.2026**
(21) Anmeldenummer: 24173733.7
(22) Anmeldetag: 02.05.2024
(51) Int. Cl.: F16D 48/06

(54) **VERFAHREN UND VORRICHTUNG ZUR ERMITTLUNG EINES DREHMOMENTS UND LANDWIRTSCHAFTLICHES ZUGFAHRZEUG**
METHOD AND DEVICE FOR DETERMINING A TORQUE AND AGRICULTURAL TRACTOR
PROCÉDÉ ET DISPOSITIF DE DÉTERMINATION D'UN COUPLE ET VÉHICULE DE TRACTION AGRICOLE

(30) Priorität: 24.05.2023 DE 102023113598
(43) Veröffentlichungstag der Anmeldung: 27.11.2024
(73) Patentinhaber: Deere & Company, Moline, IL 61265 (US)
(72) Erfinder: KEGEL, VOLKER, 69163 Mannheim (DE); MUELLER, DAVID, 69163 Mannheim (DE); FRITZ, NORBERT, 68163 Mannheim (DE); GUGEL, RAINER, 69163 Mannheim (DE)
(74) Vertreter: Stein, Stefan

(56) Entgegenhaltungen:
- DE-A1- 102019 209 401
- US-A1- 2018 172 089
- US-A1- 2018 187 728
- US-A1- 2022 235 533
- US-B2- 9 618 064

## Beschreibung

Die Erfindung betrifft ein Verfahren gemäß dem Oberbegriff des unabhängigen Anspruchs 1, eine Vorrichtung gemäß dem Oberbegriff des unabhängigen Anspruchs 11 und ein landwirtschaftliches Zugfahrzeug gemäß dem Oberbegriff des unabhängigen Anspruchs 13.

Aus EP 1 293 697 A2 sind ein Verfahren und eine Vorrichtung zur Steuerung einer hydraulisch betriebenen Kupplung, insbesondere einer Zapfwellenkupplung, bekannt. Dabei erfolgt durch Sensoren eine Drehzahlermittlung vor und hinter der Kupplung, woraus ein Kupplungsschlupf ermittelt wird. Es wird laufend ein dem Kupplungsdruck entsprechender Wert bestimmt. Durch gesteuerte zeitliche Änderung des dem Kupplungsdruck entsprechenden Wertes wird der Kupplungsschlupf laufend auf einen konstanten Wert eingestellt und gehalten. Aus dem konstanten Schlupfwert und einem dem Kupplungsdruck entsprechenden Wert wird das durch die Kupplung übertragene Drehmoment permanent ermittelt. US 2018/187728 A1 offenbart und lehrt ein Verfahren zur Steuerung eines Eingriffs einer Zapfwellenkupplung. US 9,618,064 B2 offenbart ein Verfahren zur Vermeidung einer Blokade einer Kupplung. US 2018/172,089 A1 offenbart ein Verfahren zur Einstellung einer Kupplung. DE 10 2019 209 401 A1 offenbart ein Verfahren zur Anpassung eines auf einem Steuergerät hinterlegten Reibwerts eines Schaltelements. US 2022/235,533 offenbart ein Verfahren zur Steuerung von Schaltelementen.

Ausgehend von diesem Stand der Technik ist es Aufgabe der vorliegenden Erfindung, ein Verfahren, eine Vorrichtung und ein landwirtschaftliches Zugfahrzeug vorzuschlagen, die ein an einer Position eines Antriebsstranges des Zugfahrzeugs wirkendes Drehmoment technisch einfacher ermitteln.

Diese Aufgabe wird durch ein Verfahren mit den Merkmalen des Anspruchs 1, eine Vorrichtung mit den Merkmalen des Anspruch 11 und ein landwirtschaftliches Zugfahrzeug mit den Merkmalen des Anspruchs 13 gelöst. Die abhängigen Ansprüche beziehen sich auf besonders vorteilhafte Ausführungsformen der Erfindung.

Erfindungsgemäß wird ein Verfahren zur Ermittlung eines an einer Position eines Antriebsstranges eines landwirtschaftlichen Zugfahrzeugs vorgeschlagen, bevorzugt ein Traktor oder Schlepper. Der Antriebsstrang umfasst mindestens eine Kupplung, welche zwischen einem geschlossenen und einem geöffneten Zustand ansteuerbar ist.

Mittels eines ersten Drehzahlsensors wird eine antriebsseitige Drehzahl an der Kupplung erfasst, während mittels eines zweiten Drehzahlsensors eine abtriebsseitige Drehzahl an der Kupplung erfasst wird. Der erste Drehzahlsensor ist insbesondere ein erster antriebsseitiger Drehzahlsensor. Der zweite Drehzahlsensor ist insbesondere ein zweiter abtriebsseitiger Drehzahlsensor.

Während der Verfahrensdurchführung wird die Kupplung in Richtung des geöffneten Zustands angesteuert. Dabei wird zwischen den an der Kupplung antriebsseitig und abtriebsseitig erfassten Drehzahlen eine Differenz, insbesondere eine Drehzahldifferenz, bestimmt. Diese Differenz wird mit einem vorbestimmten Differenz-Grenzwert verglichen. In Abhängigkeit von dem Vergleichsergebnis wird der Wert einer die Kupplungsansteuerung bewirkenden physikalischen Größe (z.B. ein hydraulischer Druck oder ein elektrischer Steuerstrom eines Ventils, insbesondere eines elektromechanischen Aktuators und/oder eines hydraulischen Ventils) erfasst. In Abhängigkeit von diesem erfassten Wert wiederum wird das an einer Position des Antriebsstranges gesuchte Drehmoment ermittelt.

Das erfindungsgemäße Verfahren macht sich die Überlegung zunutze, dass ausgehend von einer geschlossenen Kupplung der Zeitpunkt oder Zustand eines beginnenden Kupplungsschlupfes etwa das durch diese Kupplung aktuell übertragene Drehmoment widerspiegelt und folglich die physikalischen Verhältnisse der Kupplung bei beginnendem Schlupf für die Ermittlung des Drehmomentes herangezogen werden können. Mit dieser Überlegung wird die Kupplung ausgehend von einem geschlossenen Zustand in Richtung des geöffneten Zustands angesteuert. Die dabei an- und abtriebsseitig der Kupplung erfassten Drehzahlen werden zu einer Differenz, insbesondere Drehzahldifferenz, verarbeitet. Mit dem vorbestimmten Differenz-Grenzwert werden präzise technische Verhältnisse an der Kupplung definiert, welche dem Zustand "beginnender Kupplungsschlupf" entsprechen sollen. Während der Kupplungsansteuerung kann kontinuierlich der Wert der vorgenannten Differenz ermittelt werden und dieser Wert kann ebenso kontinuierlich mit dem vorbestimmten Differenz-Grenzwert verglichen werden, so dass ein, insbesondere rechnerisch ermitteltes, Vergleichsergebnis zur Verfügung steht. Mittels des Vergleichsergebnisses kann technisch einfach entschieden werden, welchen Zustand die Kupplung hat. Insbesondere kann entschieden werden, ob sie den Zustand "beginnender Kupplungsschlupf" erreicht hat.

Die bereits erwähnte, die Kupplungsansteuerung bewirkende physikalische Größe kann hinsichtlich ihres Wertes entweder kontinuierlich oder zumindest für den Zeitpunkt eines bestimmten Vergleichsergebnisses erfasst werden. Auf diese Werte kann technisch einfach (z.B. über eine Steuereinheit oder einen Kommunikationsbus des Zugfahrzeugs) zugegriffen werden. In Abhängigkeit des erfassten Wertes dieser physikalischen Größe wiederum kann technisch einfach (z.B. über bereitgestellte Kenndaten wie etwa Formeln oder Kennlinien) das gesuchte Drehmoment bzw. dessen Wert ermittelt werden.

Somit kann das an einer Position des Antriebsstranges wirkende Drehmoment allein mit wenigen, insbesondere zwei, Drehzahlsensoren und geringem technischen Aufwand ermittelt werden. Die für die Drehmomentermittlung benötigten Verfahrensschritte halten die physikalische Komplexität des Verfahrens gering und fördern hierdurch eine präzise Ermittlung des Drehmoments mit geringem Kostenaufwand. Insbesondere kann auf verhältnismäßig teure Drehmomentsensoren verzichtet werden. Wie bereits erwähnt, wird aus den an der Kupplung antriebsseitig und abtriebsseitig erfassten Drehzahlen eine vorhandene Differenz ermittelt. Diese Differenz kann unmittelbar als eine Drehzahldifferenz gebildet sein. Alternativ kann für die Differenzbildung eine von der Drehzahl abgeleitete andere physikalische Größe verwendet werden. Beispielsweise kann aus an- und abtriebsseitig der Kupplung erfassten Geschwindigkeiten, insbesondere Rotations- oder Winkelgeschwindigkeiten eine Differenz ermittelt werden.

Erfindungsgemäss wird der Wert der die Kupplungsansteuerung bewirkenden physikalischen Größe zumindest dann erfasst, wenn die Drehzahldifferenz den Differenz-Grenzwert erreicht oder überschreitet. Hierdurch können die für die Drehmomentermittlung benötigten Daten mit geringem technischen Aufwand bereitgestellt werden.

In einem Ausführungsbeispiel der Erfindung wird die Kupplung durch einen elektromechanischen Aktuator und/oder ein hydraulisches Ventil und eine entsprechende Hydraulikflüssigkeit (z.B. Öl) angesteuert. Das hydraulische Ventil kann insbesondere als ein Proportionalventil ausgebildet sein. Diese bewährte Technologie zur Kupplungsansteuerung unterstützt eine präzise Durchführung des Verfahrens. Der elektromechanische Aktuator führt vorteilhafterweise zu einem reduzierten Energieverbrauch, da kein hydraulischer Kreislauf bereitgestellt werden muss.

Weiterhin bietet das für die Kupplungsansteuerung verwendete Ventil technisch einfache Möglichkeiten, eine geeignete, die Kupplungsansteuerung bewirkende physikalische Größe und deren Werte zu erfassen. Hierfür bieten sich insbesondere ein hydraulischer Ausgangsdruck des Ventils oder ein das Ventil ansteuernder elektrischer Steuerstrom an. Die Werte dieser physikalischen Größen stehen ohne technischen Mehraufwand für die Verfahrensdurchführung bereit, da sie für andere technische Zwecke im Zugfahrzeug ohnehin erfasst, verarbeitet und übertragen werden, z.B. in einer Steuereinheit oder einem Kommunikationsbus (z.B. Isobus, CAN-Bus) des Fahrzeugs.

In einer besonders vorteilhaften Weiterbildung des Verfahrens wird das Drehmoment in Abhängigkeit von bereitgestellten Kenndaten ermittelt, welche ein Verhältnis zwischen der die Kupplungsansteuerung bewirkenden physikalischen Größe und dem Drehmoment repräsentieren. Mit den bereitgestellten Kenndaten wird eine technisch einfache Ermittlung des Drehmoments unterstützt. So kann z.B. bei einem bekannten Wert des vorgenannten Steuerstromes oder hydraulischen Ausgangsdruckes auf Basis der Kenndaten mathematisch einfach der Wert des Drehmoments ermittelt werden. Insbesondere wird der Wert des Drehmoments ermittelt, indem dieses Drehmoment mit einer Drehmomentkapazität der Kupplung gleichgesetzt wird, wobei diese Drehmomentkapazität M_kap von der die Kupplungsansteuerung bewirkenden physikalischen Größe abhängig ist. Insbesondere ist die Drehmomentkapazität unmittelbar von dem hydraulischen Ausgangsdruck abhängig oder mittelbar vom Steuerstrom (über das bekannte Verhältnis zwischen dem Steuerstrom und dem hydraulischen Ausgangsdruck) abhängig.

Die Kenndaten werden bevorzugt durch eine vorherige Kalibrierung der Kupplung generiert. Die Kenndaten können beispielsweise als tabellarische Wertepaare, als eine Kennlinie oder als Formel(n) bereitgestellt werden. Insbesondere kann das gesuchte Drehmoment mit einer Drehmomentkapazität M_kap der Kupplung gleichgesetzt werden, wenn ein Kupplungsschlupf beginnt bzw. wenn die aufgrund der an- und abtriebsseitig erfassten Drehzahlen vorhandene Differenz den vorbestimmten Differenz-Grenzwert erreicht oder überschreitet. Hierbei gilt im Falle einer elektromechanisch und/oder einer hydraulisch angesteuerten Kupplung für die Drehmomentkapazität M_kap: M_kap = Dp(p_hy) - Df + Dv Der Anteil Dp ist - abgesehen von dem veränderlichen Wert des erfassten hydraulischen Ausgangsdruckes p_hy des die Kupplung ansteuernden Ventils - bekannt, z.B. durch einmalige Messung an der Kupplung. Im Übrigen beinhaltet der Anteil Dp die Geometrie der Kupplung und ggf. einen Reibwert der Kupplungslamellen. Der Anteil Df ist ein bekannter konstanter Wert und hängt von physikalischen Federgrößen der Kupplung ab, z.B. eine Kraft der eingesetzten Rückstellfeder(n), Federkonstante, Vorspannung, Federsteifigkeit, Anzahl der Federn. Der Anteil Dv berücksichtigt die Geometrie der Kupplung und die Dichte der verwendeten Hydraulikflüssigkeit (z.B. Öl). Im Übrigen ist der Anteil Dv von einer Drehzahl derjenigen Kupplungsseite abhängig, in dessen Bereich sich die Hydraulikflüssigkeit bewegt. Beispielsweise ist diese Drehzahl = 0, wenn die Kupplung als eine Bremsfunktion ausgebildet ist und die vorgenannte Kupplungsseite dann unbeweglich mit einem Getriebegehäuse verbunden ist.

In weiterer Ausgestaltung der Erfindung wird mit mehreren Kupplungen jeweils verfahrensgemäß ein Drehmoment ermittelt, wobei diese Drehmomente mathematisch gemittelt werden (z.B. arithmetischer Mittelwert, mittlere Abweichung, Standardabweichung), um davon ausgehend das an einer Position des Antriebsstranges wirkende Drehmoment zu ermitteln. Die Verwendung mehrerer Kupplungen kann die statistische Genauigkeit des zu ermittelnden Drehmoments verbessern. Vorzugsweise wird hierbei ein sehr kurzer Zeitabstand zwischen der Ansteuerung der einzelnen Kupplungen eingehalten, um möglichst gleiche Verhältnisse am Antriebsstrang zu gewährleisten und hierdurch etwaige größere Abweichungen der jeweiligen Drehmomente an den einzelnen Kupplungen zu vermeiden.

Eine vorteilhafte Weiterbildung des Verfahrens sieht vor, dass im Falle einer zeitlich wiederholten Ermittlung des Drehmoments eine andere Kupplung innerhalb des Antriebsstranges zur Drehmomentermittlung angesteuert wird. Insbesondere werden sämtliche in Frage kommenden Kupplungen in einer bestimmten Reihenfolge für die Drehmomentermittlung verwendet. Die bei der Kupplungsansteuerung für die Drehmomentermittlung entstehende zusätzliche thermische Energie wird durch die abwechselnde Verwendung einer anderen Kupplung gleichmäßig über alle verwendbaren Kupplungen verteilt, so dass eine übermäßige Beanspruchung einer einzelnen Kupplung innerhalb des Antriebsstranges vermieden wird.

Weiter vorzugsweise erfolgt die Auswahl einer Kupplung zur Drehmomentermittlung in Abhängigkeit von einer thermischen Kapazität und/oder in Abhängigkeit von einem aktuellen Drehmoment eines Antriebsmotors des Zugfahrzeugs. Beispielsweise wird im Falle eines hohen Antriebsmotor-Drehmoments eine Kupplung mit einer hohen Drehmomentkapazität ausgewählt, während bei einem niedrigen Antriebsmotor-Drehmoments eine Kupplung mit einer niedrigen Drehmomentkapazität ausgewählt wird.

Für die Verfahrensdurchführung können alle im Antriebsstrang vorhandene Kupplungsfunktionen bzw. Kupplungen ausgewählt werden, z.B. Kupplungen für Gangstufen, Kupplungseinheiten für eine Fahrtrichtungsumkehr, MFWD, etc.

In einer weiteren vorteilhaften Ausgestaltung wird eine Allradkupplung zur Zu- und Abschaltung eines Vorderachsantriebs eines landwirtschaftlichen Zugfahrzeugs als diejenige Kupplung angesteuert, mit der verfahrensgemäß ein Drehmoment ermittelt wird. Die Allradkupplung ist mit einem Vorderachs-Getriebeabgang des Fahrzeuggetriebes antriebsmäßig verbindbar und wird mitunter auch als MFWD (Mechanical Front Wheel Drive)-Kupplung bezeichnet. Die Allradkupplung kann bedarfsweise ein Drehmoment an einen Vorderachsantrieb übertragen, so dass der permanente Hinterachsantrieb des Zugfahrzeugs durch einen Vorderachsantrieb ergänzt wird, um einen Allradantrieb zu realisieren. Unter Anwendung des Verfahrens an einer Kupplung des Fahrzeuggetriebes und an der Allradkupplung können ein Gesamt-Drehmoment und ein Vorderachs-Drehmoment ermittelt werden. Durch Subtraktion beider Werte kann ein Hinterachs-Drehmoment ermittelt werden und die ermittelten Werte der Vorderachs- und Hinterachs-Drehmomente können miteinander verglichen und beurteilt werden. Dies unterstützt eine technisch einfache und präzise Abschätzung, ob der Vorderachsantrieb als Traktionshilfe benötigt wird oder nicht.

In Ausgestaltung der Erfindung wird das ermittelte Drehmoment bzw. werden die ermittelten Drehmomente dazu genutzt, mit geringem technischen Aufwand einen Traktionskoeffizienten eines landwirtschaftlichen Zugfahrzeugs zu bestimmen. Beispielsweise können über ermittelte Drehmoment-Werte die Antriebs- bzw. Zugkräfte der Fahrzeugräder bestimmt werden. Unter Berücksichtigung weiterer bekannter physikalischer Größen am Zugfahrzeug (z.B. Achslasten bzw. Aufstandskräfte) kann dann ein Traktionskoeffizient präzise bestimmt werden.

Die Erfindung betrifft weiter eine Vorrichtung zur Ermittlung eines an einer Position eines Antriebsstranges eines landwirtschaftlichen Zugfahrzeugs wirkenden Drehmoments. Die Vorrichtung umfasst eine Steuereinheit zur Durchführung des Verfahrens nach einem der Ansprüche 1 bis 10. Insbesondere ermittelt die Steuereinheit das an einer Position des Antriebsstranges wirkende Drehmoment. Dabei kann die Steuereinheit eine Kupplung des Antriebsstranges zwischen einem geschlossenen und einem geöffneten Zustand ansteuern. Mit anderen Worten, die Steuereinheit kann die Kupplung des Antriebsstranges derart ansteuern, dass die Kupplung in einen geschlossenen und einen geöffneten Zustand einstellbar und/oder verstellbar ist, insbesondere bewegbar ist. Ebenso kann die Kupplung auch in einen Zustand zwischen dem geschlossenen und dem geöffneten Zustand einstellbar und/oder verstellbar sein, insbesondere bewegbar sein. Unterschiedliche Zustände der Kupplung werden insbesondere dadurch erreicht, dass die Steuereinheit den Wert einer die Kupplungsansteuerung bewirkenden physikalischen Größe verändert bzw. variiert. Während einer solchen Ansteuerung, insbesondere während einer Ansteuerung in Richtung des geöffneten Zustands der Kupplung, kann die Steuereinheit an- und abtriebsseitige Drehzahlen der angesteuerten Kupplung oder aus diesen Drehzahlen abgeleitete physikalische Größen verarbeiten und aus den an- und abtriebsseitigen Werten eine Differenz bilden. Die Differenz wird in der Steuereinheit mit einem vorbestimmten Differenz-Grenzwert verglichen, welcher einen Zustand "beginnender Schlupf der Kupplung" repräsentiert. Ein spezifisches Vergleichsergebnis entspricht einem bestimmten Wert der die Kupplungsansteuerung bewirkenden physikalischen Größe. Dieser Wert wird in der Steuereinheit erfasst und dient zur Ableitung (z.B. über bekannte Kenndaten) des gesuchten Drehmoments.

Die Steuereinheit kann als ein elektronisches Modul, ein eingebettetes System, eine Recheneinheit, ein Computer, als ein Modul zum Steuern und/oder Regeln einzelner Bestandteile der Vorrichtung ausgebildet sein. Die Steuereinheit kann einen Prozessor, einen Speicher und/oder alle Software, Hardware, Algorithmen, Anschlüsse, insbesondere auch Sensoren, umfassen, die für die Steuerung und/oder Regelung der Vorrichtung oder Bestandteilen davon erforderlich sind. Einzelne oder sämtliche Verfahrensschritte des offenbarten Verfahrens können als Programm oder Algorithmus ausgebildet sein, das auf und/oder mit der Steuereinheit ausführbar ist. Die Steuereinheit kann jedes Gerät umfassen, das Daten von verschiedenen Sensoren analysieren, Daten vergleichen und die erforderlichen Entscheidungen treffen kann, um den Betrieb der Vorrichtung und die erforderlichen Aufgaben zur Steuerung des Betriebs der Vorrichtung zu steuern und/oder zu regeln und/oder auszuführen.

Die Steuereinheit kann mit der Vorrichtung, insbesondere den Bauteilen (z.B. Sensoren, elektromechanische Aktuatoren und/oder hydraulische Ventile) der Vorrichtung verbunden sein, bevorzugt signalverbunden und/oder signalübertragend und/oder datenleitend verbunden sein. Die Steuereinheit kann zur Steuerung und/oder Regelung und/oder Ansteuerung der miteinander verbundenen Bauteile dienen. Unter einer signalverbundenen und/oder signalübertragenden und/oder datenleitenden Verbindung ist dabei zu verstehen, dass ein Austausch von Signalen zwischen den verbundenen Bauteilen stattfindet. Die Verbindung kann kabelgebunden, insbesondere also mit Kabel, und/oder kabellos, also per Funk, beispielsweise mit Bluetooth realisiert sein. Der Kommunikationsbus kann beispielsweise Isobus, CAN-Bus oder ähnliches sein. Die Steuereinheit kann der Vorrichtung zur Durchführung des Verfahrens und/oder dem landwirtschaftlichen Zugfahrzeug zugeordnet sein, insbesondere am Fahrzeug angeordnet sein. Die Steuereinheit kann auch zweiteilig beispielsweise als Teil des landwirtschaftlichen Zugfahrzeugs und als Teil der Vorrichtung ausgebildet sein. Die Steuereinheit kann unmittelbar mit der in einer Kabine des Zugfahrzeugs angeordneten Ein- und Ausgabeeinheit in Verbindung stehen, durch welche von einer Bedienperson eingegebene Daten an die Steuereinheit übertragen oder von dieser empfangen und ausgegeben werden können. Denkbar ist aber auch, dass die Steuereinheit mittelbar durch eine übergeordnete Steuereinheit mit der Ein- und Ausgabeeinheit verbunden ist.

In Ausgestaltung der Erfindung umfasst die Vorrichtung einen elektromechanischen Aktuator und/oder ein hydraulisches Ventil zur Ansteuerung einer ausgewählten Kupplung des Antriebsstranges. Mittels der Steuereinheit ist der elektromechanische Aktuator und/oder das hydraulische Ventil betätigbar und/oder einstellbar sein, so dass die Kupplung zwischen einem geschlossenen und einem geöffneten Zustand ansteuerbar ist. Mit anderen Worten, der elektromechanische Aktuator und/oder das hydraulische Ventil ist mit der Steuereinheit derart ansteuerbar, dass die Kupplung in den geschlossenen und den geöffneten Zustand einstellbar und/oder verstellbar ist, insbesondere bewegbar ist. Ebenso kann die Kupplung auch zwischen in einen Zustand zwischen dem geschlossenen und dem geöffneten Zustand einstellbar und/oder verstellbar sein, insbesondere bewegbar sein. Dabei legt die Steuereinheit insbesondere die Werte eines elektrischen Steuerstromes für den elektromechanischen Aktuator und/oder das hydraulische Ventil fest und/oder verarbeitet diese Werte. Die Steuereinheit kann auch (z.B. mittels eines Drucksensors) die Werte eines Ausgangsdruckes dieses elektromechanischen Aktuators und/oder hydraulischen Ventils verarbeiten.

In weiterer vorteilhafter Ausgestaltung umfasst die Vorrichtung einen ersten Drehzahlsensor zur Erfassung einer antriebsseitigen Drehzahl an der Kupplung und einen zweiten Drehzahlsensor zur Erfassung einer abtriebsseitigen Drehzahl an der Kupplung. Insbesondere ist der erste Drehzahlsensor zur Erfassung der antriebsseitigen Drehzahl auch antriebsseitig der Kupplung angeordnet. Weiter insbesondere ist der zweite Drehzahlsensor zur Erfassung der abtriebsseitigen Drehzahl auch abtriebsseitig der Kupplung angeordnet.

Die Erfindung betrifft weiter ein landwirtschaftliches Zugfahrzeug, bevorzugt ein Traktor oder Schlepper, mit einer Vorrichtung nach Anspruch 11 oder 12. Durch die im Zugfahrzeug integrierte Vorrichtung kann ein an einer spezifischen Position des Antriebsstranges wirkendes Drehmoment ermittelt werden. Dies erfolgt mit geringem technischen Aufwand, indem eine Steuereinheit der Vorrichtung eine ausgewählte Kupplung des Antriebsstranges ansteuert und die Ansteuerungsgröße (z.B. ein elektrischer Steuerstrom) sowie an der Kupplung erfasste Drehzahlen oder davon abgeleitete Größen auswertet. Mit derart ermittelbaren Drehmomenten kann die Vorrichtung ein technisch einfaches und kostengünstiges Antriebsmanagement (z.B. Traktionshilfe) für das Zugfahrzeug unterstützen.

Im Folgenden werden die Erfindung sowie weitere Vorteile und vorteilhafte Weiterbildungen und Ausgestaltungen der Erfindung sowohl in apparativer als auch in verfahrenstechnischer Hinsicht anhand von Ausführungsbeispielen und unter Bezugnahme auf die Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: eine schematische Darstellung eines erfindungsgemäßen landwirtschaftlichen Zugfahrzeugs, und
- Fig. 2: eine schematische und blockschaltbildartige Darstellung einzelner Bestandteile des landwirtschaftlichen Zugfahrzeugs und eines ersten Ausführungsbeispiels der erfindungsgemäßen Vorrichtung zur Durchführung des erfindungsgemäßen Verfahrens.

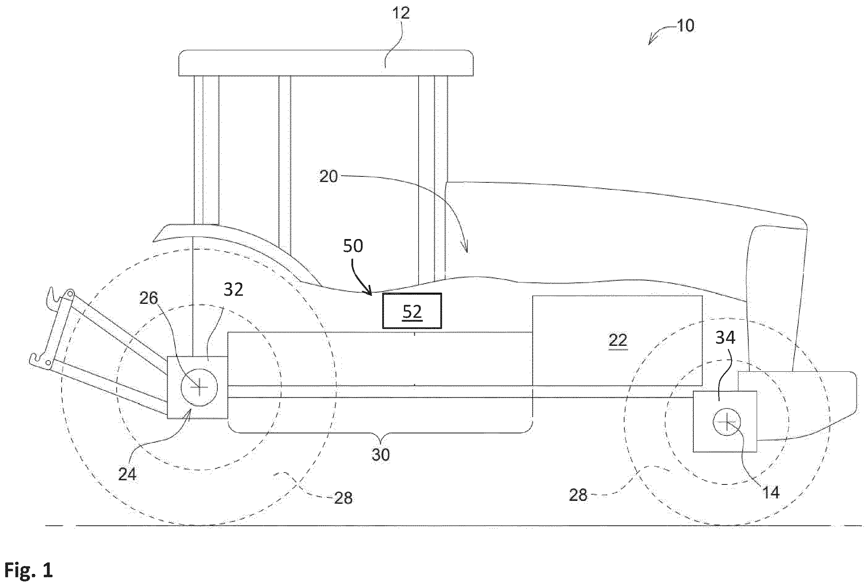

Figur 1 zeigt eine schematische Darstellung eines erfindungsgemäßen landwirtschaftlichen Zugfahrzeugs 10, insbesondere in Gestalt eines Traktors, mit einem Antriebsstrang 20 in einer möglichen Ausgestaltung. Der grundsätzliche Aufbau eines landwirtschaftlichen Zugfahrzeugs 10 wird als dem Fachmann bekannt angenommen. Das Zugfahrzeug 10 umfasst ferner eine Kabine 12, eine vordere Fahrzeugachse 14 und eine hintere Fahrzeugachse 26. Die vordere Fahrzeugachse 14 und die hintere Fahrzeugachse 26 sind Teil des Antriebsstrangs 20, wobei die hintere Fahrzeugachse 26 in der Regel permanent und die vordere Fahrzeugachse 14 in der Regel bedarfsweise zuschaltbar angetrieben werden können.

Der Antriebsstrang 20 umfasst ferner einen Antriebsmotor 22, der als Verbrennungskraftmaschine ausgeführt sein kann, und eine Getriebestruktur, die aus verschiedenen einzelnen Getriebekomponenten zusammengesetzt sein kann. Die Getriebestruktur kann ausgehend vom Antriebsmotor 22 im Kraft- und Momentenfluss eine Getriebeanordnung 30, einen Fahrantrieb 24, ein hinteres Achsgetriebe 32 und ein vorderes Achsgetriebe 34 aufweisen. Mit der Getriebeanordnung 30 lässt sich Antriebsleistung des Antriebsmotors 22, insbesondere mit unterschiedlichen Gangstufen, auf die hintere Fahrzeugachse 26 und bedarfsweise zusätzlich an die vordere Fahrzeugachse 14 übertragen. Die hintere Fahrzeugachse 26, welche eine Drehung der vorderen und/oder hinteren Fahrzeugachse (über damit verbundene Bodeneingriffsmittel) in einen Vorschub des Traktors 10 wandelt, wird daher abhängig von einer in der Getriebeanordnung 30 gewählten Gangstufe mit unterschiedlicher Drehzahl angetrieben. Das Zugfahrzeug 10 kann eines oder mehrere Bodeneingriffsmittel in Form von Rädern 28 aufweisen, welche mit einem Untergrund zur Übertragung von Antriebskräften in Eingriff stehen und/oder durch die sich das Zugfahrzeug 10 auf dem Untergrund abstützt. Das Zugfahrzeug 10 kann außerdem ein Fahrgestell aufweisen, wobei das Fahrgestell insbesondere von den an der vorderen und hinteren Fahrzeugachse 14, 26 aufgehängten Rädern getragen werden kann.

In dem Zugfahrzeug 10 ist außerdem eine erfindungsgemäße Vorrichtung 50 mit einer Steuereinheit 52 zur Durchführung des erfindungsgemäßen Verfahrens enthalten.

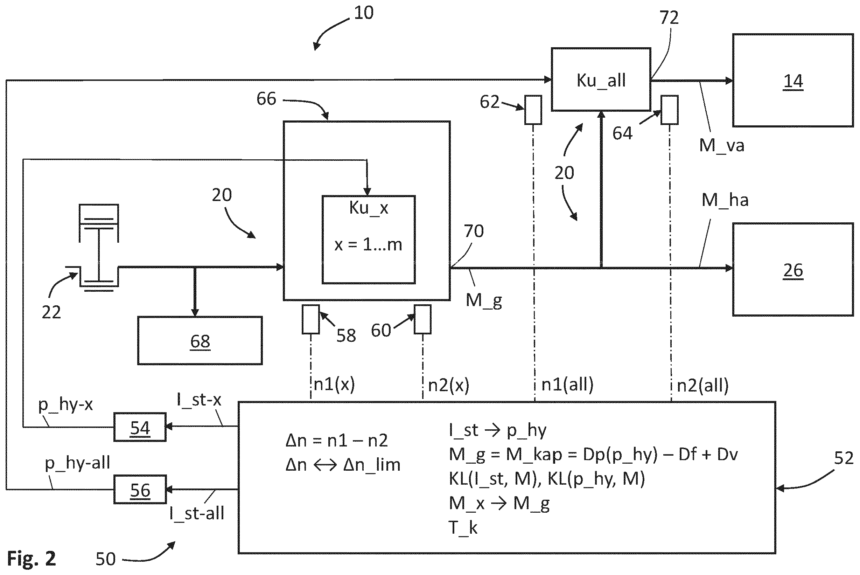

Figur 2 zeigt eine schematische und blockschaltbildartige Darstellung eines Ausführungsbeispiels der Vorrichtung 50 und einzelne Bestandteile des Zugfahrzeugs 10.

Wie bereits erwähnt, umfasst die Vorrichtung 50 die Steuereinheit 52. Die Vorrichtung umfasst außerdem zwei Ventile 54, 56, die insbesondere als elektromechanischen Aktuatoren und/oder hydraulische Ventile ausgebildet sein können, welche stellvertretend für eine andere benötigte Anzahl von elektromechanischen Aktuatoren und/oder hydraulischen Ventilen stehen und durch die Steuereinheit 52 betätigt werden. Weiterhin sind mehrere Drehzahlsensoren 58, 60, 62, 64 Bestandteil der Vorrichtung 50.

Die Ventile 54, 56 können insbesondere als Proportionalventile ausgebildet sein. Die Ventile 54, 56 werden jeweils durch einen elektrischen Steuerstrom I_st der Steuereinheit 52, d.h. durch den Steuerstrom I_st-x für das Ventil 54 und durch den Steuerstrom I_st-all für das Ventil 56, betätigt.

Mittels des Ventils 54 ist eine elektromechanisch oder eine hydraulisch betriebene Kupplung Ku_x innerhalb eines Fahrzeuggetriebes 66, welche Bestandteil der Getriebeanordnung 30 ist, zwischen einem geschlossenen und einem geöffneten Zustand ansteuerbar. Dabei ist x eine natürliche Zahl von 1 bis m. An der jeweiligen Kupplung Ku_x wird eine antriebsseitige Drehzahl n1(x) und eine abtriebsseitige Drehzahl n2(x) erfasst. Hierzu weist die Vorrichtung 50 einen oder mehrere erste(n) antriebsseitige(n) Drehzahlsensor(en) 58 sowie einen oder mehrere zweite(n) abtriebsseitige(n) Drehzahlsensor(en) 60 auf. Mit anderen Worten ist der erste Drehzahlsensor 58 insbesondere antriebsseitig der Kupplung Ku_x angeordnet und der zweite Drehzahlsensor 60 ist insbesondere abtriebsseitig der Kupplung Ku_x angeordnet.

Mittels des Ventils 56 ist eine Allradkupplung Ku_all zwischen einem geschlossenen und einem geöffneten Zustand ansteuerbar. Die Allradkupplung Ku_all ermöglicht bedarfsweise einen Allradantrieb, indem neben der hinteren Fahrzeugachse 26 zusätzlich auch die vordere Fahrzeugachse 14 angetrieben wird. Hierbei wird vorzugsweise ein MFWD-System (Mechanical Front Wheel Drive) eingesetzt. An der Allradkupplung Ku_all werden antriebsseitige Drehzahlen n1(all) und abtriebsseitige Drehzahlen n2(all) prinzipiell in derselben Weise erfasst wie bezüglich der Kupplung Ku_x erläutert. Die Vorrichtung 50 weist deshalb bezüglich der Allradkupplung Ku_all ein weiteres Paar von Drehzahlsensoren auf, nämlich einen ersten antriebsseitigen Drehzahlsensor 62 und einen zweiten abtriebsseitigen Drehzahlsensor 64. Mit anderen Worten ist der erste Drehzahlsensor 62 insbesondere antriebsseitig der Allradkupplung Ku_all angeordnet und der zweite Drehzahlsensor 64 ist insbesondere abtriebsseitig der Allradkupplung Ku_all angeordnet.

Die Antriebsleistung des Antriebsmotors 22 wird für den Antriebsstrang 22 und für andere Leistungsabnehmer 68 (z.B. Lüfter, Wasserpumpe, Batterie, Klimakompressor, Fahrzeughydraulik) des Zugfahrzeugs 10 und/oder eines Anbaugerätes benötigt. Das vom Antriebsmotor 22 abgegebene Drehmoment wird entsprechend verteilt, so dass an einem Getriebeabgang 70 des Fahrzeuggetriebes 66 ein Drehmoment M_g zur Verfügung steht. Dieses Drehmoment M_g kann mittels der Steuereinheit 52 ermittelt werden. Ebenso kann ein Drehmoment M_va an einem Kupplungsabgang 72 der Allradkupplung Ku_all ermittelt werden. Auch an anderen Positionen des Antriebsstranges 20 wirkende Drehmomente können mittels der Steuereinheit 52 ermittelt werden.

Zur Ermittlung des Drehmoments M_g wird eine geeignete Kupplung Ku_x ausgewählt und durch das zugeordnete Ventil - hier das Ventil 54 - angesteuert. Dabei wird der Steuerstrom I_st-x derart verändert, dass die Kupplung Ku_x in Richtung des geöffneten Zustands angesteuert wird. Während der Kupplungsansteuerung wird eine zwischen den an- und abtriebsseitig der Kupplung Ku_x erfassten Drehzahlen n1(x), n2(x) vorhandene Drehzahldifferenz Δn bestimmt. Diese Drehzahldifferenz Δn wird mit einem vorbestimmten Differenz-Grenzwert Δn_lim verglichen. Der Differenz-Grenzwert Δn_lim wird derart vorbestimmt, dass er etwa einem Zustand "beginnender Schlupf" an der Kupplung Ku_x entspricht. Relevant ist deshalb die Erfassung des Wertes einer die Kupplungsansteuerung bewirkenden physikalischen Größe zumindest in dem Zeitpunkt, in dem die Drehzahldifferenz Δn den Differenz-Grenzwert Δn_lim erreicht oder überschreitet. Der erfasste Wert dieser physikalischen Größe kann dann mit bereitgestellten Kenndaten (z.B. Kennlinie, Formel) verknüpft werden, welche ein Verhältnis zwischen der die Kupplungsansteuerung bewirkenden physikalischen Größe und einer Drehmomentkapazität M_kap der Kupplung Ku_x bzw. dem damit gleichgesetzten Drehmoment M_g repräsentieren.

Bei der vorgenannten physikalischen Größe handelt es sich vorzugsweise um den Steuerstrom I_st. Ausgehend von einem Wert des Steuerstromes I_st wird das Drehmoment M_g vorzugsweise ermittelt, indem zunächst über eine bekannte Ventil-Kennlinie der Wert eines entsprechenden Ausgangsdruckes p_hy-x ermittelt wird. Dieser Druck-Wert kann dann in eine Formel für die Drehmomentkapazität M_kap = Dp(p_hy) - Df + Dv eingesetzt werden, deren Anteile Df und Dv kupplungsspezifisch bekannt sind und deren Anteil Dp von dem Ausgangsdruck p_hy einer Kupplung abhängt.

Somit ist über die vorangegangenen Überlegungen das gesuchte Drehmoment M_g technisch und mathematisch einfach ermittelbar.

Es kann auch eine andere geeignete Kennlinie KL(I_st, M) als Kenndaten bereitgestellt werden, welche einen unmittelbaren Zusammenhang zwischen dem Steuerstrom I_st und einem Drehmoment M bzw. einer Drehmomentkapazität an der Kupplung Ku_x repräsentiert.

Alternativ handelt es sich bei der vorgenannten physikalischen Größe um den hydraulischen Ausgangsdruck p_hy, dessen Werte mittels eines Drucksensors erfasst werden und in der Steuereinheit 52 ausgewertet werden können. Der relevante Druck-Wert zur Ermittlung des Drehmoments M_g kann dann direkt in die Formel für die Drehmomentkapazität M_kap eingegeben werden oder mit einer kupplungsspezifischen Kennlinie KL(p_hy, M) verknüpft werden, welche einen unmittelbaren Zusammenhang zwischen dem Ausgangsdruck p_hy und einem Drehmoment M bzw. einer Drehmomentkapazität an der Kupplung Ku_x repräsentiert.

Da in dem Fahrzeuggetriebe 66 mehrere Kupplungen Ku_x vorhanden sind, können mehr als eine Kupplungen Ku_x genutzt werden, um jeweils ein Drehmoment M_x gemäß der obigen Erläuterungen zu bestimmen. Diese Drehmomente können dann mathematisch gemittelt werden, um das Drehmoment M_g zu repräsentieren.

Weiterhin kann durch die vorhandenen Kupplungen Ku_x eine zeitlich wiederholte Ermittlung des Drehmoments M_g abwechselnd mit einer anderen Kupplung Ku_x durchgeführt werden, um eine gleichmäßige Ansteuerung aller Kupplungen Ku_x im Laufe der Betriebszeit zu ermöglichen.

Analog zu der Ermittlung des Drehmoments M_g kann mittels der Allradkupplung Ku_all und der beiden Drehzahlsensoren 62, 64 ein Drehmoment M_va ermittelt werden. Hieraus kann ein Drehmoment M_ha (M_ha = M_g - M_va) für den Antrieb der hinteren Fahrzeugachse 26 ermittelt werden.

Weiterhin kann mit Hilfe der ermittelten Drehmomente M_va, M_ha und bekannter Größen am Zugfahrzeug 10 und dessen Rädern 28 auf technisch einfache Weise ein Traktionskoeffizient T_k des Zugfahrzeugs 10 bestimmt werden.

Somit steht mit der erläuterten Ermittlung der verschiedenen Drehmomente M_g, M_va, M_ha und Traktionskoeffizienten T_k ein technisches einfaches und effizientes Antriebsmanagement (z.B. Traktionshilfe) für das Zugfahrzeug 10 zur Verfügung.

## Patentansprüche

1. Verfahren zur Ermittlung eines an einer Position eines Antriebsstranges (20) eines landwirtschaftlichen Zugfahrzeugs (10) wirkenden Drehmoments (M_g, M_va), wobei eine Kupplung (Ku_x, Ku_all) des Antriebsstranges (20) zwischen einem geschlossenen und einem geöffneten Zustand ansteuerbar ist, wobei die Kupplung (Ku_x, Ku_all) durch einen elektromechanischen Aktuator (54, 56) und/oder ein hydraulisches Ventil (54, 56), angesteuert wird, und wobei mittels eines ersten Drehzahlsensors (58, 62) eine antriebsseitige Drehzahl (n1(x), n1(all)) an der Kupplung (Ku_x, Ku_all) und mittels eines zweiten Drehzahlsensors (60, 64) eine abtriebsseitige Drehzahl (n2(x), n2(all)) an der Kupplung (Ku_x, Ku_all) erfasst wird, wobei
- die Kupplung (Ku_x, Ku_all) in Richtung des geöffneten Zustands angesteuert wird,
- während der Kupplungsansteuerung eine zwischen den an- und abtriebsseitig erfassten Drehzahlen (n1(x), n2(x); n1(all), n2(all)) vorhandene Differenz (Δn) ermittelt wird,
- die Differenz (Δn) mit einem vorbestimmten Differenz-Grenzwert (Δn_lim) verglichen wird,
- in Abhängigkeit von dem Vergleichsergebnis der Wert einer die Kupplungsansteuerung bewirkenden physikalischen Größe (I_st, p_hy) erfasst wird, wobei der Wert eines Ausgangsdruckes (p_hy) des elektromechanischen Aktuators (54, 56) und/oder des hydraulischen Ventils (54, 56) erfasst wird und/oder der Wert eines elektrischen Steuerstromes (I_st) des elektromechanischen Aktuators (54, 56) und/oder des hydraulischen Ventils (54, 56) erfasst wird, welche eine die Kupplungsansteuerung bewirkende physikalische Größe bilden, **dadurch gekennzeichnet, dass** der Wert des Ausgangsdruckes (p_hy) und/oder des elektrischen Steuerstromes (I_st) erfasst wird, wenn die Differenz (Δn) den Differenz-Grenzwert (Δn_lim) erreicht oder überschreitet, und in Abhängigkeit von dem erfassten Wert des Ausgangsdruckes (p_hy) und/oder des elektrischen Steuerstromes (I_st) das Drehmoment (M_g, M_va) ermittelt wird.

2. Verfahren nach einem der vorhergehenden Ansprüche, **dadurch gekennzeichnet, dass** das Drehmoment in Abhängigkeit von bereitgestellten Kenndaten (Dp, Df, Dv, KL) ermittelt wird, welche ein Verhältnis zwischen der die Kupplungsansteuerung bewirkenden physikalischen Größe (I_st, p_hy) und dem Drehmoment (M_g, M_va) repräsentieren.

3. Verfahren nach Anspruch 1 oder 2, **dadurch gekennzeichnet, dass** mit mehreren Kupplungen (Ku_x) in Abhängigkeit von dem jeweils erfassten Wert der die Kupplungsansteuerung bewirkenden physikalischen Größe (I_st, p_hy) jeweils ein Drehmoment (M_x) bestimmt wird, welche mathematisch gemittelt werden für die Ermittlung des an einer Position des Antriebstranges (20) wirkenden Drehmoments (M_g).

4. Verfahren nach einem der vorhergehenden Ansprüche, **dadurch gekennzeichnet, dass** die Ermittlung des an einer Position des Antriebstranges (20) wirkenden Drehmoments (M_g) zeitlich wiederholt wird und für die Wiederholung eine andere Kupplung (Ku_x) innerhalb des Antriebsstranges (20) angesteuert wird.

5. Verfahren nach einem der vorhergehenden Ansprüche, **dadurch gekennzeichnet, dass** als Kupplung eine Allradkupplung (Ku_all) zur Zu- und Abschaltung eines Vorderachsantriebs (34) eines landwirtschaftlichen Zugfahrzeugs (10) angesteuert wird.

6. Verfahren nach einem der vorhergehenden Ansprüche, **dadurch gekennzeichnet, dass** in Abhängigkeit von dem ermittelten Drehmoment (M_g, M_va) ein Traktionskoeffizient (T_k) eines landwirtschaftlichen Zugfahrzeugs (10) bestimmt wird.

7. Vorrichtung (50) zur Ermittlung eines an einer Position eines Antriebsstranges (20) eines landwirtschaftlichen Zugfahrzeugs (10) wirkenden Drehmoments (M_g, M_va), mit einer Steuereinheit (52) zur Durchführung des Verfahrens nach einem der Ansprüche 1 bis 6.

8. Vorrichtung nach Anspruch 7, **dadurch gekennzeichnet, dass** die Vorrichtung
- einen elektromechanischen Aktuator (54, 56) und/oder ein hydraulisches Ventil (54, 56) zur Ansteuerung einer Kupplung (Ku_x, Ku_all) des Antriebsstranges (20) zwischen einem geschlossenen und einem geöffneten Zustand aufweist, und/oder
- einen ersten Drehzahlsensor (58, 62) zur Erfassung einer antriebsseitigen Drehzahl (n1(x), n1(all)) an der Kupplung (Ku_x, Ku_all) aufweist und einen zweiten Drehzahlsensor (60, 64) zur Erfassung einer abtriebsseitigen Drehzahl (n2(x), n2(all)) an der Kupplung (Ku_x, Ku_all) aufweist.

9. Landwirtschaftliches Zugfahrzeug (10) mit einer Vorrichtung (50) nach Anspruch 7 oder 8.

## Claims

1. Method for determining a torque (M_g, M_va) acting at a position of a drive train (20) of an agricultural towing vehicle (10), wherein a clutch (Ku_x, Ku_all) of the drive train (20) can be controlled between a closed and an open state, wherein the clutch (Ku_x, Ku_all) is controlled by an electromechanical actuator (54, 56) and/or a hydraulic valve (54, 56),
and wherein a drive-side rotational speed (n1(x), n1(all)) is captured at the clutch (Ku_x, Ku_all) by means of a first rotational speed sensor (58, 62) and an output-side rotational speed (n2(x), n2(all)) is captured at the clutch (Ku_x, Ku_all) by means of a second rotational speed sensor (60, 64), wherein
- the clutch (Ku_x, Ku_all) is controlled in the direction of the open state,
- during clutch control, a difference (Δn) between the rotational speeds (n1(x), n2(x); n1(all), n2(all)) captured on the drive and output sides is determined,
- the difference (Δn) is compared with a predetermined difference limit value (Δn_lim),
- depending on the comparison result, the value of a physical variable (l_st, p_hy) that causes the clutch control is captured, wherein the value of an output pressure (p_hy) of the electromechanical actuator (54, 56) and/or of the hydraulic valve (54, 56) is captured and/or the value of an electrical control current (l_st) of the electromechanical actuator (54, 56) and/or of the hydraulic valve (54, 56) is captured, which values form a physical variable that causes the clutch control, **characterized in that** the value of the output pressure (p_hy) and/or of the electrical control current (l_st) is captured when the difference (Δn) reaches or exceeds the difference limit value (Δn_lim), and the torque (M_g, M_va) is determined depending on the captured value of the output pressure (p_hy) and/or of the electrical control current (l_st).

2. Method according to any one of the preceding claims, **characterized in that** the torque is determined on the basis of provided characteristic data (Dp, Df, Dv, KL) which represent a relationship between the physical variable (l_st, p_hy) that causes the clutch control and the torque (M_g, M_va).

3. Method according to Claim 1 or 2, **characterized in that** a torque (M_x) is respectively determined with a plurality of clutches (Ku_x) on the basis of the respectively captured value of the physical variable (l_st, p_hy) that causes the clutch control, which torques are mathematically averaged for the purpose of determining the torque (M_g) acting at a position of the drive train (20).

4. Method according to any one of the preceding claims, **characterized in that** the determination of the torque (M_g) acting at a position of the drive train (20) is repeated over time and a different clutch (Ku_x) within the drive train (20) is controlled for the repetition.

5. Method according to any one of the preceding claims, **characterized in that**, as a clutch, an all-wheel clutch (Ku_all) for activating and deactivating a front-axle drive (34) of an agricultural towing vehicle (10) is controlled.

6. Method according to any one of the preceding claims, **characterized in that** a traction coefficient (T_k) of an agricultural towing vehicle (10) is determined on the basis of the determined torque (M_g, M_va).

7. Device (50) for determining a torque (M_g, M_va) acting at a position of a drive train (20) of an agricultural towing vehicle (10), having a control unit (52) for carrying out the method according to any one of Claims 1 to 6.

8. Device according to Claim 7, **characterized in that** the device
- has an electromechanical actuator (54, 56) and/or a hydraulic valve (54, 56) for controlling a clutch (Ku_x, Ku_all) of the drive train (20) between a closed state and an open state, and/or
- has a first rotational speed sensor (58, 62) for capturing a drive-side rotational speed (n1(x), n1(all)) at the clutch (Ku_x, Ku_all) and has a second rotational speed sensor (60, 64) for capturing an output-side rotational speed (n2(x), n2(all))) at the clutch (Ku_x, Ku_all) .

9. Agricultural towing vehicle (10) having a device (50) according to Claim 7 or 8.

## Revendications

1. Procédé de détermination d'un couple de rotation (M_g, M_va) agissant sur une position d'une chaîne cinématique (20) d'un véhicule tracteur agricole (10), un embrayage (Ku_x, Ku_all) de la chaîne cinématique (20) pouvant être piloté entre un état fermé et un état ouvert, l'embrayage (Ku_x, Ku_all) étant piloté par un actionneur électromécanique (54, 56) et/ou une soupape hydraulique (54, 56),
et une vitesse de rotation côté entraînement (n1(x), n1(all)) étant détectée sur l'embrayage (Ku_x, Ku_all) au moyen d'un premier capteur de vitesse de rotation (58, 62) et une vitesse de rotation côté sortie (n2(x), n2(all)) étant détectée sur l'embrayage (Ku_x, Ku_all) au moyen d'un deuxième capteur de vitesse de rotation (60, 64),
- l'embrayage (Ku_x, Ku_all) étant piloté en direction de l'état ouvert,
- une différence (Δn) présente entre les vitesses de rotation détectées côté entraînement et côté sortie (n1(x), n2(x); n1(all), n2(all)) étant déterminée pendant le pilotage d'embrayage,
- la différence (Δn) étant comparée à une valeur limite de différence prédéfinie (Δn_lim),
- la valeur d'une grandeur physique (1_st, p_hy) provoquant le pilotae d'embrayage étant détectée en fonction du résultat de comparaison, la valeur d'une pression de sortie (p_hy) de l'actionneur électromécanique (54, 56) et/ou de la soupape hydraulique (54, 56) étant détectée et/ou la valeur d'un courant de commande électrique (1_st) de l'actionneur électromécanique (54, 56) et/ou de la soupape hydraulique (54, 56) étant détectées, lesquelles forment une grandeur physique provoquant le pilotage d'embrayage, **caractérisé en ce que** la valeur de la pression de sortie (p_hy) et/ou du courant de commande électrique (l_st) est détectée lorsque la différence (Δn) atteint ou dépasse la valeur limite de différence (ΔN_lim), et le couple de rotation (M_g, M_va) étant déterminé en fonction de la valeur détectée de la pression de sortie (p_hy) et/ou du courant de commande électrique (1_st).

2. Procédé selon la revendication précédente, **caractérisé en ce que** le couple de rotation est déterminé en fonction de données caractéristiques fournies (Dp, Df, Dv, KL) qui représentent un rapport entre la grandeur physique (l_st, p_hy) provoquant le pilotage d'embrayage et le couple de rotation (M_g, M_va).

3. Procédé selon la revendication 1 ou 2, **caractérisé en ce qu'**est défini, avec plusieurs embrayages (Ku_x), en fonction de la valeur respectivement détectée de la grandeur physique (l_st, p_hy) provoquant le pilotage d'embrayage, un couple de rotation (M_x) dont la moyenne mathématique est calculée pour la détermination du couple de rotation (M_g) agissant sur une position de la chaîne cinématique (20).

4. Procédé selon l'une des revendications précédentes, **caractérisé en ce que** la détermination du couple de rotation(M_g) agissant sur une position de la chaîne cinématique (20) est répétée dans le temps et, pour la répétition, un embrayage différent (Ku_x) est piloté à l'intérieur de la chaîne cinématique (20).

5. Procédé selon l'une des revendications précédentes, **caractérisé en ce qu'**est piloté, en tant qu'embrayage, un embrayage de traction intégrale (Ku_all) pour activer et désactiver un entraînement sur essieu avant (34) d'un véhicule tracteur agricole (10).

6. Procédé selon l'une des revendications précédentes, **caractérisé en ce qu'**un coefficient de traction (T_k) d'un véhicule tracteur agricole (10) est défini en fonction du couple de rotation déterminé (M_g, M_va).

7. Dispositif (50) de détermination d'un couple de rotation (M_g, M_va) agissant sur une position d'une chaîne cinématique (20) d'un véhicule tracteur agricole (10), avec une unité de commande (52) pour la mise en œuvre du procédé selon l'une des revendications 1 à 6.

8. Dispositif selon la revendication 7, **caractérisé en ce que** le dispositif
- comporte un actionneur électromécanique (54, 56) et/ou une soupape hydraulique (54, 56) pour piloter un embrayage (Ku_x, Ku_all) de la chaîne cinématique (20) entre un état fermé et un état ouvert, et/ou
- comporte un premier capteur de vitesse de rotation (58, 62) pour détecter une vitesse de rotation côté entraînement (n1(x), n1(all)) sur l'embrayage (Ku_x, Ku_all) et un deuxième capteur de vitesse de rotation (60, 64) pour détecter une vitesse de rotation côté sortie (n2(x), n2(all)) sur l'embrayage (Ku_x, Ku_all).

9. Véhicule tracteur agricole (10) avec un dispositif (50) selon la revendication 7 ou 8.
